# EUROPEAN PATENT APPLICATION

(11) **EP 4 737 956 A1**
(43) Date of publication of application: **06.05.2026**
(21) Application number: 25194799.0
(22) Date of filing: 08.08.2025
(51) Int. Cl.: G02B 5/04, G02B 5/20, G02B 6/293, G02B 27/10

(54) **WAVELENGTH DIVISION DEVICE AND WAVELENGTH DIVISION DEVICE MANUFACTURING METHOD CAPABLE OF IMPROVING FILTER ALIGNMENT ACCURACY**

(30) Priority: 30.10.2024 US 202418931146
(71) Applicant: Himax Technologies Limited, Tainan City 74148 (TW)
(72) Inventor: Kuo, Han-Yi, 74148 Tainan City (TW); Lu, Yin-Tung, 74148 Tainan City (TW); Hung, Chien-Feng, 74148 Tainan City (TW); Wu, Shi-Jen, 74148 Tainan City (TW)
(74) Representative: Straus, Alexander

(57) **Abstract**

A wavelength division device (100) includes a substrate (10) having one or more grooves (10a), a plurality of filter bars (FB1-FB4) disposed in the one or more grooves (10a) of the substrate (10), and a prism (11) disposed on the substrate (10). Each of the filter bars (FB1-FB4) corresponds to an optical filtering wavelength. The prism (11) is configured to cover the plurality of filter bars (FB1-FB4). A surface of the substrate (10) is etched to form the one or more grooves (10a). After the plurality of filter bars (FB1-FB4) are coated, the plurality of filter bars (FB1-FB4) are bonded in the one or more grooves (10a) of the substrate (10). A resin (20) disposed on the substrate (10) is imprinted by a working mold (30) to form the prism (11).

## Description

### Field of the Invention

The present invention illustrates a wavelength division device and a wavelength division device manufacturing method, and more particularly, a wavelength division device and a wavelength division device manufacturing method capable of improving filter alignment accuracy and reducing bonding alignment process.

### Background of the Invention

Wavelength division multiplexing (WDM) is a technology that uses several lasers to simultaneously transmit multiple beams of lasers with different wavelengths on a single optical fiber. The WDM can be used for transmitting each of the beams separately, or combining beams of several wavelengths of light to transmit them together. Local area network WDM (LWDM) is a wavelength division multiplexing technology based on Ethernet channels. It uses 12 wavelengths ranging from 1269 nm to 1332 nm in an O-band (1260 nm to 1360 nm), with a wavelength spacing of 4 nm. The operating wavelengths of LWDM are characterized by low dispersion and good stability. At the same time, LWDM can increase channel capacity and further save the utilization of optical fibers.

Traditional multiplexer and demultiplexer concepts utilize a parallelogram structure and filters to combine and transmit light beams of different wavelengths into an optical fiber. The filters are assembled by bonding. An alternative method is to use a lift-off technology in the filter coating process. However, if the lift-off process is used, based on 4 channels of the LWDM, the coating process and quality are very difficult to achieve.

### Summary of the Invention

The present disclosure aims at providing a wavelength division device and a wavelength division device manufacturing method for achieving high filter alignment accuracy and reducing the complexity of the bonding alignment process.

This is achieved by the wavelength division device according to claim 1 and the wavelength division device manufacturing method according to claim 11. The dependent claims pertain to advantageous further developments.

### Brief Description of the Drawings

In the following, the invention is further illustrated by way of example, taking reference to the accompanying drawings. Thereof
FIG.1 is a structure of a wavelength division device according to an embodiment of the present invention;
FIG.2 illustrates a first stage of manufacturing the wavelength division device in FIG.1;
FIG.3 illustrates a second stage of manufacturing the wavelength division device in FIG.1;
FIG.4 illustrates a third stage of manufacturing the wavelength division device in FIG.1;
FIG.5 illustrates a fourth stage of manufacturing the wavelength division device in FIG.1;
FIG.6 illustrates a fifth stage of manufacturing the wavelength division device in FIG.1;
FIG.7 illustrates a sixth stage of manufacturing the wavelength division device in FIG.1;
FIG.8 illustrates light paths of performing a multiplexing mechanism by the wavelength division device in FIG.1;
FIG.9 illustrates light paths of performing a demultiplexing mechanism by the wavelength division device in FIG.1;
FIG.10 illustrates coating technologies of a substrate of the wavelength division device in FIG.1 when the multiplexing mechanism is performed;
FIG.11 illustrates coating technologies of the substrate of the wavelength division device in

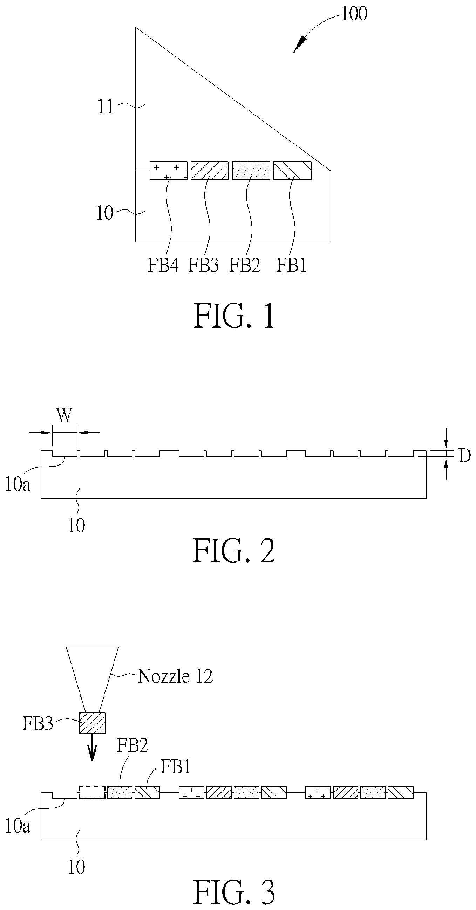

FIG.1 when the demultiplexing mechanism is performed; and

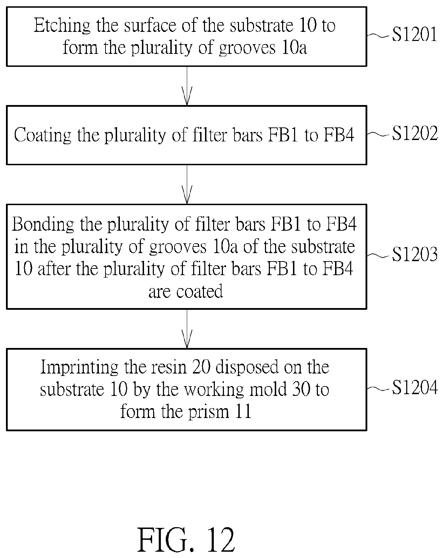

FIG.12 is a flow chart of manufacturing the wavelength division device in FIG.1.

### Detailed Description

FIG.1 is a structure of a wavelength division device 100 according to an embodiment of the present invention. The wavelength division device 100 can be a wavelength division multiplexer or a wavelength division demultiplexer, which allows a plurality of optical signals with different wavelengths to be transmitted simultaneously over a single optical fiber. The wavelength division device 100 includes a substrate 10, a plurality of filter bars FB1 to FB4, and a prism 11. The substrate 10 can be a base material on which the other components are mounted. In an embodiment, the substrate 10 can be a glass wafer with a plurality of etched grooves. The plurality of filter bars FB1 to FB4 are disposed in the one or more grooves of the substrate 10. Each of the filter bars FB1 to FB4 corresponds to an optical filtering wavelength. The filter bars are configured to selectively allow only specific optical wavelengths of light to pass through while blocking or reflecting others. The specific optical wavelengths can be selected from a range of O-band (1260 nm to 1360 nm). The prism 11 is disposed on the substrate 10 and configured to cover the plurality of filter bars FB1 to FB4. In an embodiment, the prism 11 can be a triangular piece of resin or other transparent material that refracts (or reflects) light. In the wavelength division device 100, a surface of the substrate 10 is etched to form the one or more grooves. After the plurality of filter bars FB1 to FB4 are coated, the plurality of filter bars FB1 to FB4 are bonded in the one or more grooves of the substrate 10. Further, a resin 20 disposed on the substrate 10 is imprinted by a working mold 30 to form the prism 11. Details of manufacturing the wavelength division device 100 are illustrated below.

FIG.2 illustrates a first stage of manufacturing the wavelength division device 100. As previously illustrated, the substrate 10 has the one or more grooves 10a. The one or more grooves 10a are generated on a glass wafer substrate by using a "dry etching" technique. In an embodiment, the substrate 10 can be a glass wafer. For example, a mask is applied to the glass wafer surface. This mask defines the pattern of the grooves 10a to be etched. The mask material is resistant to the etchant, protecting the areas underneath it while allowing the exposed areas to be etched. Then, the glass wafer is placed in a dry etching chamber. Plasma is generated within the chamber. Here, plasma is a highly ionized gas containing ions, electrons, and neutral atoms. The ions in the plasma bombard the exposed areas of the glass wafer, physically or chemically removing material and creating the one or more grooves 10a. After etching is complete, the mask is removed by using a suitable solvent or stripping process. In the wavelength division device 100, the one or more grooves 10a have substantially identical depths and substantially identical widths. For example, the depths D of the grooves can be 10 micrometers. The widths W of the grooves can be 125 micrometers. In FIG.2, the substrate 10 is a glass substrate with a precise array of grooves 10a. These grooves 10a provide designated locations for placing the filter bars FB1 to FB4, ensuring accurate alignment and spacing within the wavelength division device 100.

FIG.3 illustrates a second stage of manufacturing the wavelength division device 100. Here, each of the filter bars FB1 to FB4 is individually coated with a specific "glass coating liquid material". This implies a separate coating process for each bar, allowing for precise control over the optical properties of each filter. The primary function of the coatings is to create wavelength-selective filters. By varying the composition of the coating material, each filter bar is tuned to transmit a specific wavelength band while reflecting or absorbing others. Then, the plurality of filter bars FB1 to FB4 are bonded in the one or more grooves 10a of the substrate 10 by using an adhesive material having a refractive index matching with a glass. For example, in FIG.2, a specialized automated (pick-and-place) PnP machine (such as a nozzle 12) is employed. The PnP machine can accurately identify and locate individual filter bars from a source, such as the glass wafer. This ensures the correct filter bar is selected for each groove 10a. The PnP machine can precisely align the filter bar (such as filter bar FB3) with the corresponding groove 10a on the substrate 10. Once aligned, the filter bars FB1 to FB4 are bonded to the substrate 10 within the groove 10a. For example, a small amount of adhesive is applied to the groove 10a or the bottom of the filter bars FB1 to FB4 before placement. In an embodiment, the adhesive could be an ultraviolet (UV)-curable epoxy or a thermally conductive material to ensure secure attachment and heat dissipation. Since the grooves 10a are used for positioning the filter bars FB1 to FB4 bonded on the substrate 10, it ensures the accurate placement and secure attachment of the filter bars, which are essential for achieving the desired optical filtering characteristics and overall device functionality.

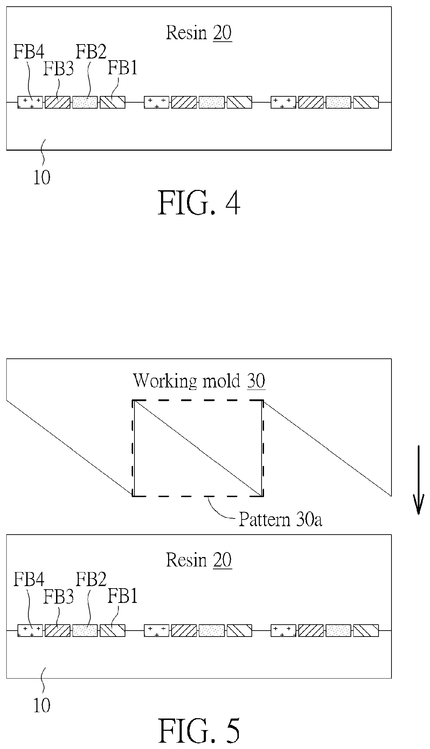

FIG.4 illustrates a third stage of manufacturing the wavelength division device 100. After the plurality of filter bars FB1 to FB4 are bonded in the one or more grooves 10a of the substrate 10, the substrate 10 is processed by a thermal curing process for heating an adhesive material between the plurality of filter bars FB1 to FB4 and the one or more grooves 10a, or processed by a UV light curing process for transforming the adhesive material from a liquid state to a hardened state. After the thermal curing process or the UV light curing process is completed, in FIG.4, a resin 20 is disposed on the substrate 10 and configured to cover the plurality of filter bars FB1 to FB4. In the embodiment, the resin 20 should be highly transparent to allow light to pass through with minimal loss or distortion. Further, the resin 20 needs to have appropriate viscosity for the imprinting process. It should be fluid enough to flow into the mold cavity and conform to the prism shape, but not too runny that it spreads uncontrollably. The resin 20 is curable, meaning it can transition from a liquid to a solid state. This can be achieved through UV curing, thermal curing, or other methods. The curing process should result in a stable, solid prism structure. In an embodiment, the resin 20 can be an epoxy resin.

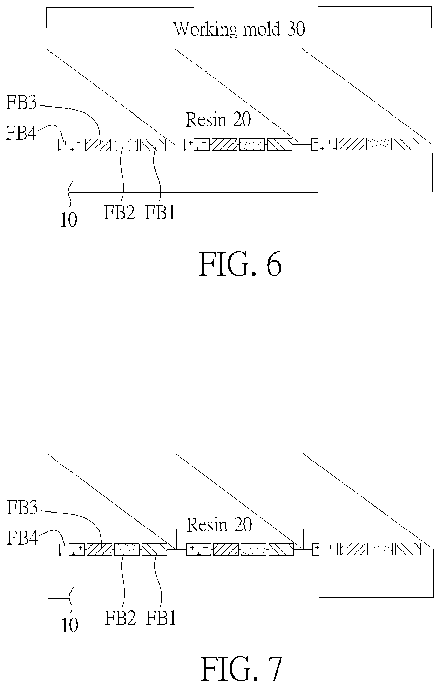

FIG.5 illustrates a fourth stage of manufacturing the wavelength division device 100. FIG.6 illustrates a fifth stage of manufacturing the wavelength division device 100. In FIG.5, a working mold 30 is selected with a predetermined pattern 30a that corresponds to the desired prism shape. Specifically, the working mold 30 has a cavity with the inverse shape of the prism 11. Then, the working mold 30 is carefully positioned over the resin 20 (liquid state) on the substrate 10 to ensure proper alignment to achieve the desired prism orientation and location. After the working mold 30 is positioned, the working mold 30 is pressed against the resin 20 with a controlled force for a time duration to form the prism 11. The force is sufficient to ensure the resin 20 completely fills the working mold cavity and conforms to the prism shape. In FIG.6, the controlled force (or say, a pressure) is maintained for the time duration to allow the resin 20 to fully take the shape of the working mold 30. This time duration depends on the resin's properties and the desired prism dimensions. In an embodiment, if the resin 20 requires a curing process, the assembly in FIG.6 can be exposed to an appropriate curing method, such as the UV curing, the thermal curing, or other curing methods. In FIG.6, it is important to ensure complete curing of the resin 20 for achieving the desired mechanical and optical properties of the prism 11.

FIG.7 illustrates a sixth stage of manufacturing the wavelength division device 100. After the resin 20 has been imprinted and cured, the working mold 30 is removed from the substrate 10. In an embodiment, to facilitate de-molding, a mold release agent can be applied to the working mold 30 before the imprinting process. The mold release agent can create a thin layer between the working mold 30 and the resin 20, reducing adhesion and allowing for easier separation. Further, the de-molding process may involve applying a controlled force to separate the working mold 30 from the resin 20 being cured. The controlled force should be sufficient to overcome the adhesion between the working mold 30 and resin 20, but not so high that it damages the prism 11 or the substrate 10. After the working mold 30 is removed from the substrate 10, the substrate 10 can be sawed to adjust the size of the wavelength division device 100. Finally, the wavelength division device 100 is completely manufactured.

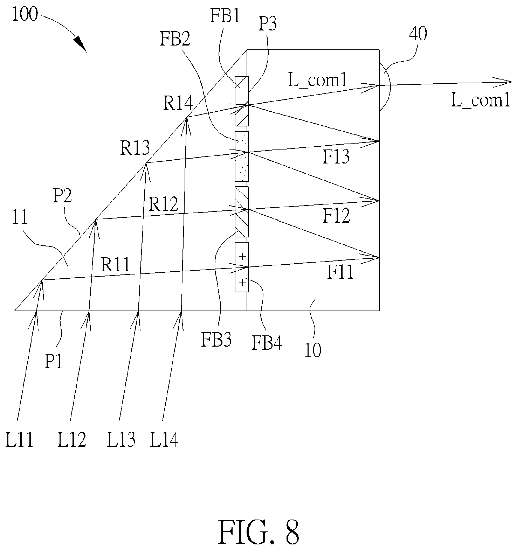

FIG.8 illustrates light paths of performing a multiplexing mechanism by the wavelength division device 100. The wavelength division device 100 can be a wavelength division multiplexer. In other words, the wavelength division device 100 can transmit a plurality of light signals simultaneously over a single optical fiber by using different wavelengths of laser light. Each light signal is carried on its own specific wavelength. The wavelength division multiplexer allows a plurality of light signals to be combined and transmitted together without interfering with each other. In FIG.8, the prism 11 of the wavelength division device 100 includes a first surface P1, a second surface P2, and a third surface P3. The first surface P1 is configured to receive a plurality of light signals L11 to L14 having a plurality of optical wavelengths. The second surface P2 is disposed adjacent to the first surface P1 and configured to reflect the plurality of light signals for generating a plurality of reflected light signals. For example, the light signals L11 to L14 are reflected by the second surface P2 for generating reflected light signals R11 to R14, respectively. The third surface P3 is disposed adjacent to the first surface P1 and the second surface P2 and configured to receive the plurality of reflected light signals R11 to R14. Then, the plurality of reflected light signals R11 to R14 are received by the plurality of filter bars FB1 to FB4 through the third surface P3 of the prism 11. Further, the plurality of reflected light signals R11 to R14 are multiplexed to generate a composite light signal by the substrate 10. Details are illustrated below. The light signal F11 is generated by filtering the reflected light signal R11. When the reflected light signal R11 passes through the filter bar FB4, the light signal F11 is the reflected light signal R11. Then, the light signal F11 is reflected by the substrate 10 and combined with the reflected light signal R12 for generating the light signal F12 when the reflected light signal R12 passes through the filter bar FB3. Then, the light signal F13 is reflected by the substrate 10 and combined with the reflected light signal R13 for generating the light signal F13 when the reflected light signal R13 passes through the filter bar FB2. Then, the light signal F13 is reflected by the substrate 10 and combined with the reflected light signal R14 for generating the light signal L_com1 when the reflected light signal R14 passes through the filter bar FB1. As a result, the light signal L_com1 is outputted from the substrate 10 through a lens 40. In FIG.8, since the plurality of light signals L11 to L14 are multiplexed to generate the light signal L_com1 through the wavelength division device 100, the light signal L_com1 is regarded as the composite light signal carried by a single optical fiber.

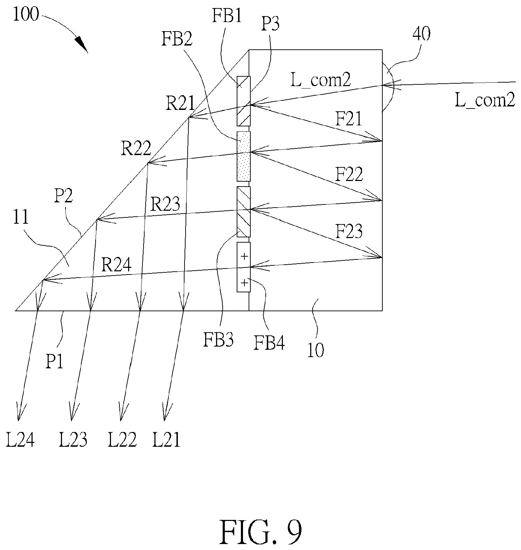

FIG.9 illustrates light paths of performing a demultiplexing mechanism by the wavelength division device 100. The wavelength division device 100 can be a wavelength division demultiplexer. In other words, the wavelength division device 100 can take a composite light signal including of a plurality wavelengths of light signals and separate them into individual wavelengths. It's essentially the reverse process of the wavelength division multiplexing. In FIG.9, a composite light signal L_com2 is demultiplexed and filtered by the substrate 10 and the plurality of filter bars FB1 to FB4 to generate the plurality of filtered light signals R21 to R24. Details are illustrated below. After the composite light signal L_com2 is inputted to the substrate 10 through the lens 40, the filter bar FB1 receives the composite light signal L_com2. Then, a portion of the composite light signal L_com2 is passed through the filter bar FB1 to generate the filtered light signal R21. The remaining portion of the composite light signal L_com2 is reflected by the filter bar FB1 to generate the light signal F21. The light signal F21 is reflected by the substrate 10 and received by the filter bar FB2. Then, a portion of the light signal F21 is passed through the filter bar FB2 to generate the filtered light signal R22. The remaining portion of the light signal F21 is reflected by the filter bar FB2 to generate the light signal F22. The light signal F22 is reflected by the substrate 10 and received by the filter bar FB3. Then, a portion of the light signal F22 is passed through the filter bar FB3 to generate the filtered light signal R23. The remaining portion of the light signal F22 is reflected by the filter bar FB3 to generate the light signal F23. The light signal F23 is reflected by the substrate 10 and received by the filter bar FB4. When the light signal F23 passes through the filter bar FB4, the light signal F23 becomes the filtered light signal R24. In the wavelength division device 100 in FIG.9, the prism 11 includes the first surface P1, the second surface P2, and the third surface P3. The second surface P2 is disposed adjacent to the first surface P1. The third surface P3 is disposed adjacent to the first surface P1 and the second surface P3. Further, the third surface P3 is configured to receive the plurality of filtered light signals R21 to R24. The second surface P2 is configured to reflect the plurality of filtered light signals R21 to R24 for generating the plurality of reflected light signals L20 to L24. For example, the filtered light signal R21 is reflected by the second surface P2 for generating the reflected light signal L21. The filtered light signal R22 is reflected by the second surface P2 for generating the reflected light signal L22. The filtered light signal R23 is reflected by the second surface P2 for generating the reflected light signal L23. The filtered light signal R24 is reflected by the second surface P2 for generating the reflected light signal L24. In other words, when the wavelength division device 100 is the wavelength division demultiplexer, it uses wavelength-selective components (i.e., such as filter bars FB1 to FB4) for isolating specific wavelengths from the composite light signal L_com2. Each wavelength carries a separate data channel. By doing so, the wavelength division demultiplexer directs each channel to its corresponding output port.

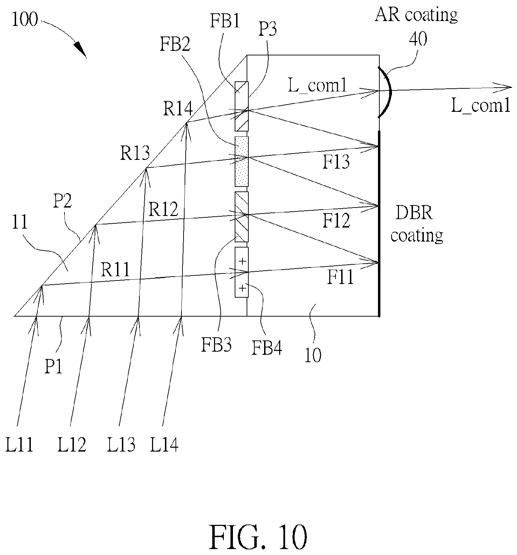

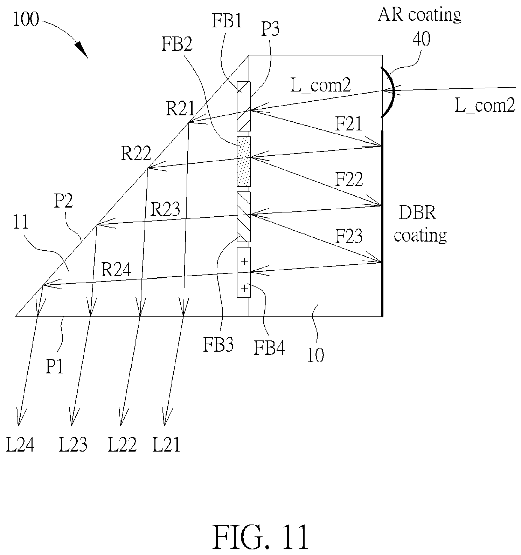

FIG.10 illustrates coating technologies of the substrate 10 of the wavelength division device 100 when the multiplexing mechanism is performed. FIG. 11 illustrates the coating technologies of the substrate 10 of the wavelength division device 100 when the demultiplexing mechanism is performed. In an embodiment, in order to achieve light splitting and combining performance, an anti-reflective (AR) coating and a distributed Bragg reflector (DBR) coating can be introduced to the substrate 10 when the multiplexing mechanism or the demultiplexing mechanism is performed. AR coating is microscopically thin layers of material applied to the surface of lenses 40. The AR coating can be designed to reduce light reflection and increase light transmittance. The DBR coating is a type of optical filter that reflects specific wavelengths of light while allowing others to pass through. It's made up of a plurality of layers of alternating materials with different refractive indices. The DBR coating structure can selectively reflect certain wavelengths of light based on their interference patterns. In an embodiment, the DBR coating can be regarded as a mirror of an edge surface of the substrate 10 for reflecting light signals.

FIG. 12 is a flow chart of manufacturing the wavelength division device 100. The wavelength division device 100 is manufactured according to step S1201 to step S1204. Any reasonable technology or hardware modification falls into the scope of the present invention. Step S1201 to step S1204 are illustrated below. The following table: Step S1201: etching the surface of the substrate 10 to form the one or more grooves 10a; Step S1202: coating the plurality of filter bars FB1 to FB4; Step S1203: bonding the plurality of filter bars FB1 to FB4 in the one or more grooves 10a of the substrate 10 after the plurality of filter bars FB1 to FB4 are coated; Step S1204: imprinting the resin 20 disposed on the substrate 10 by the working mold 30 to form the prism 11. Details of step S1201 to step S1204 are previously illustrated. Thus, they are omitted here.

**In** the wavelength division device 100, since the glass wafer is etched to form the one or more grooves 10a for filter bonding alignment, accuracy of filter alignment and positioning quality is improved. Further, complexity of the filtering bonding alignment process is reduced. As a result, the wavelength division device 100 can be miniaturized.

To sum up, the present invention discloses a wavelength division device and a wavelength division device manufacturing method. The wavelength division device includes a substrate with etched grooves to accommodate a plurality of filter bars. The prism formed by imprinting resin on the substrate, covers the filter bars. The wavelength division device manufacturing method of the present invention simplifies the assembly process by pre-defining the filter bar positions within the grooves, resulting in a more compact and robust optical component suitable for various applications in optical communications.

## Claims

1. A wavelength division device (100), comprising:
a substrate (10);
a plurality of coated filter bars (FB1-FB4), wherein each filter bar of the plurality of filter bars corresponds to an optical filtering wavelength; and
a prism (11) disposed on the substrate (10) and configured to cover the plurality of filter bars (FB1-FB4);
**characterized in that:**
the substrate (10) has one or more grooves (10a) formed on a surface by etching;
the plurality of coated filter bars (FB1-FB4) are bonded within the one or more grooves (10a) of the substrate (10); and
the prism (11) is formed by a resin (20) disposed on the substrate (10) and imprinted by a working mold (30).

2. The device (100) of claim 1, **characterized in that** the one or more grooves (10a) have substantially identical depths (D) and substantially identical widths (W), and the substrate (10) is a glass wafer.

3. The device (100) of claim 1, **characterized in that** the plurality of filter bars (FB1-FB4) are coated on their surfaces by different glass coating liquid materials, and the plurality of filter bars (FB1-FB4) are bonded in the one or more grooves (10a) of the substrate (10) by using an adhesive material having a refractive index matching with a glass.

4. The device (100) of claim 1, **characterized in that** after the plurality of filter bars (FB1-FB4) are bonded in the one or more grooves (10a) of the substrate (10), the substrate (10) is processed by a thermal curing process for heating an adhesive material between the plurality of filter bars (FB1-FB4) and the one or more grooves (10a), or processed by an ultraviolet (UV) light curing process for transforming the adhesive material from a liquid state to a hardened state.

5. The device (100) of claim 1, **characterized in that** the working mold (30) comprises a predetermined pattern (30a) corresponding to the prism (11), the working mold (30) is pressed against the resin (20) with a controlled force for a time duration to form the prism (11), and after the time duration has elapsed, the working mold (30) is removed from the substrate (10).

6. The device (100) of claim 1, **characterized in that** the substrate (10) is sawed to adjust a size of the wavelength division device (100).

7. The device (100) of claim 1, **characterized in that** the wavelength division device (100) is a wavelength division multiplexer, and the prism (11) comprises:
a first surface (P1) configured to receive a plurality of light signals (L11-L14) having a plurality of optical wavelengths;
a second surface (P2) disposed adjacent to the first surface (P1) and configured to reflect the plurality of light signals (L11-L14) for generating a plurality of reflected light signals (R11-R14); and
a third surface (P3) disposed adjacent to the first surface (P1) and the second surface (P2) and configured to receive the plurality of reflected light signals (R11-R14).

8. The device (100) of claim 7, **characterized in that** the plurality of reflected light signals (R11-R14) are received by the plurality of filter bars (FB1-FB4) through the third surface (P3) of the prism (11), and the plurality of reflected light signals (R11-R14) are multiplexed to generate a composite light signal (L_com1) by the substrate (10).

9. The device (100) of claim 1, **characterized in that** the wavelength division device (100) is a wavelength division demultiplexer, and the prism (11) comprises:
a first surface (P1) configured to output a plurality of reflected light signals (L21-L24);
a second surface (P2) disposed adjacent to the first surface (P1) and configured to reflect a plurality of filtered light signals (R21-R24) for generating the plurality of reflected light signals (L21-L24); and
a third surface (P3) disposed adjacent to the first surface (P1) and the second surface (P2) and configured to receive the plurality of filtered light signals (R21-R24).

10. The device (100) of claim 9, **characterized in that** a composite light signal (L_com2) is demultiplexed and filtered by the substrate (10) and the plurality of filter bars (FB1-FB4) to generate the plurality of filtered light signals (R21-R24).

11. A wavelength division device manufacturing method, **characterized by** comprising:
etching a surface of a substrate (10) to form one or more grooves (10a);
coating a plurality of filter bars (FB1-FB4);
bonding the plurality of filter bars (FB1-FB4) in the one or more grooves (10a) of the substrate (10) after the plurality of filter bars (FB1-FB4) are coated; and
imprinting a resin (20) disposed on the substrate (10) by a working mold (30) to form a prism (11);
wherein each filter bar (FB1-FB4) of the plurality of filter bars corresponds to an optical filtering wavelength , and the prism (11) is disposed on the substrate (10) and configured to cover the plurality of filter bars (FB1-FB4).

12. The method of claim 11, **characterized in that** the one or more grooves (10a) have substantially identical depths (D) and substantially identical widths (W), and the substrate (10) is a glass wafer.

13. The method of claim 11, **characterized in that** coating the plurality of filter bars (FB1-FB4) is coating surfaces of the plurality of filter bars (FB1-FB4) by different glass coating liquid materials, and bonding the plurality of filter bars (FB1-FB4) is bonding in the one or more grooves (10a) of the substrate (10) by using an adhesive material having a refractive index matching with a glass, the method further comprising:
processing a thermal curing process for heating the adhesive material, or processed by an ultraviolet (UV) light curing process for transforming the adhesive material from a liquid state to a hardened state after the plurality of filter bars (FB1-FB4) are bonded in the one or more grooves (10a) of the substrate (10).

14. The method of claim 11, **characterized in that** imprinting the resin (20) disposed on the substrate (10) by the working mold (30) to form the prism (11) comprises:
pressing against the resin (20) by the working mold (30) with a controlled force for a time duration to form the prism (11); and
removing the working mold (30) from the substrate (10) after the time duration has elapsed;
wherein the working mold (30) comprises a predetermined pattern (30a) corresponding to the prism (11).

15. The method of claim 11, **characterized by** further comprising:
sawing the substrate (10) to adjust a size of a wavelength division device (100);
wherein the substrate (10), the plurality of filter bars (FB1-FB4), and the prism (11) form the wavelength division device (100).
